# EUROPEAN PATENT APPLICATION

(11) **EP 1 754 432 A1**
(43) Date of publication of application: **21.02.2007**
(21) Application number: 05018059.5
(22) Date of filing: 19.08.2005
(51) Int. Cl.: A47G 11/00, B29C 65/08, D06C 23/04

(54) **Structure of napkin having laces and method for making the same**

(71) Applicant: Medtecs International Corp. Ltd., 7th Floor, Peninsula Court Building Paseo de Roxas Cornor Makati Avenue Makati City 1226 (PH); Ko, Yao-Chen, Songshan District Taipei City 105 (TW)
(72) Inventor: Ko, Yao-Chen, Songshan District Taipei City 105 (TW)
(74) Representative: Viering, Jentschura & Partner

(57) **Abstract**

A structure of napkin having laces and the method for making the same, comprising a napkin body (1) made by fabric and used for wiping when dining, hemmed edges (2) made on the periphery of the napkin body by an embossing and hemming means (4), and special geometric motifs (3) arranged by many holes and patterns distributed in predetermined positions over the napkin body. With the above structure, a variety of geometric motifs can be embossed on the napkin body without folding the edges of the napkin body and increasing the thickness thereof. Thus, the hemmed edges can be easily made.

## Description

### Field of Invention

The present invention relates to a structure of a napkin having laces and the method for making the same. Especially, the present invention relates to a structure of napkin having laces, in which the stitch is simple, the edges of the napkin body needn't to be folded for hemming, and various motifs arranged by many holes and patterns can be simultaneously made on the surface of the napkin body. The present invention also relates to the method for making the same.

### Background of the Invention

In the table manners of western-style foods, the napkin is one of the most important things. In Europe, more high-class restaurants are more particular about the quality of napkin. In the most formal occasion, the area of the napkin is required to be about 75 cm² while the area of the napkin is 50 cm² in general occasions.

Especially, the napkin can reveal the temperament of the user. For example, the user should fold the napkin into one-third and put the folded napkin on his/her thighs and knees before dining. The purpose of the napkin is to wipe the mouth, especially before drinking so as not to leave the oil on the edge of a cup. When wiping the mouth, the user picks up one corner of the napkin to lightly press the lip. When the user cannot bear to cough or sneeze, he should turn his face aside and lower his head to cover his mouth with the napkin. The napkin should be put on the knees rather than attached to the collar or belt. No matter what kinds of dripping foods are eating, the user can never hang the napkin on his breast to prevent the food from splashing. Diners should learn how use the knife and fork well. When finishing the dining, the diners can fold the used napkin into one-fourth and put it on the left of the coffee cup. Low volume and tones are also essential to the table manners.

The napkin is also an expression of the Western culture. According to the actions, the user of the napkin may represent many different meanings. For example, the guest should pay attention to the hints made by the hostess after sitting down. When the hostess opens the napkin and puts it on the knees, it means that the feast is starting. When the hostess puts the napkin on the table, it means that the feast is finished. Even the quest is full up, he should keep dining until the feast is finished. The napkin cannot be used as a wiper to wipe the dirt of the tablecloth. If the guest incautiously pollutes the napkin, he should apologize to the hostess.

Napkins are very widely used. Since an initial model of a napkin is made from a square cloth, the cloth has been cut but its edges still are not finished yet. If the unfinished napkin is used, the end of the threads on the edges of the napkin will easily be peeled off. Thus, such unfinished napkins are unfavorable to use, and will impair the appearance and influence the feeling of dining. Further, such napkins may be broken after washing and thus cannot be used any more. Therefore, the life of the napkin has been greatly reduced.

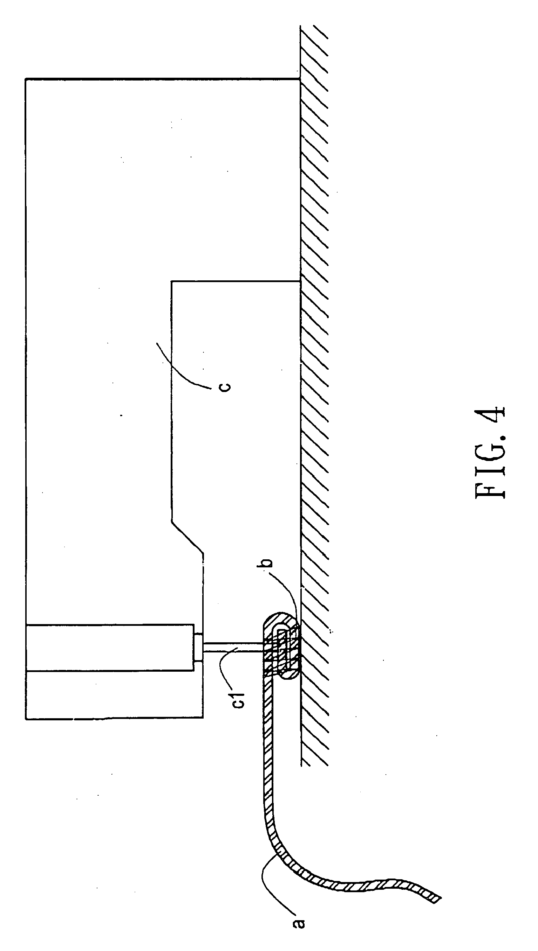

Therefore, the method for making the existing napkins, as shown in Fig. 4, relies on the following steps. After a napkin body a is completely cut, the periphery of the napkin body is folded inwardly at least one time, such that each side of the napkin body **a** is formed into a folded side strip **b.** Then, the napkin is put on a sewing machine **c**, such that each folded side strip b is sewn by the sewing needle c1 of the sewing machine **c**.

Although the napkin structure made by the above method can prevent the end of the threads in the napkin from peeling off when using, and even prevent the napkin from breaking, it still has some drawbacks as follows.
1. The method for making the conventional napkins relies on folding each side of the napkin body **a** into a side strip **b**. Such process is complex and hard to control the exact distance of each folding. Thus, the size of the side strip after folding and sewing is not uniform.
2. The conventional napkins have a folded side strip **b** on the periphery thereof, such that the napkin body **a** is thickened, causing a bad touch and lowered quality. Further, hems made by sewing will cause the end of the threads to peel off after a long-term washing, such that the life the napkin is greatly reduced.
3. The surfaces of the conventional napkins are almost plain without any motifs arranged by patterns and holes, and thus are very monotonous.

In view of the above problems in the structure of conventional napkins and the method for making the same, the inventor of the present invention thus employs his expert experiences in this field to propose an improved structure of napkin having laces and the method for making the same.

### Summary of the Invention

The object of the present invention is to provide an improved structure of the napkin having laces and the method for making the same, wherein an embossing and hemming means and the corresponding stitches are used to easily hem the edges of the napkin body and simultaneously emboss the surface of the napkin body with various motifs arranged by many holes and patterns. As a result, napkins having a variety of motifs are made, and the durability and life are also increased.

In order to achieve the above object, the present invention has a napkin body made by fabric and used for wiping when dining. The embossing and hemming means is used to hem the edges of the napkin body, and many special geometric motifs arranged by holes and patterns are distributed in the predetermined positions on the napkin body.

With the above structure, the edges of the napkin body can be easily hemmed without being folded to increase the thickness. Further, the surface of the napkin body is embossed with various motifs.

These features and advantages of the present invention will be fully understood and appreciated from the following detailed description of the accompanying drawings.

### Brief Description of the Drawings

The drawings disclose an illustrative embodiment of the present invention which serve to exemplify the various advantages and objects hereof, and are as follows:
Fig. 1 is a perspective view of the present invention;
Fig. 2 is a schematic view of an embodiment of the present invention;
Fig. 3 is a view showing the action of the present invention; and
Fig. 4 is a schematic view of prior art.

### Detailed Description of the Preferred Embodiment

In order to make the Examiner to better understand the structure, use and characteristics of the present invention, a detailed description of a preferred embodiment is made in conjunction with the accompanying drawings.

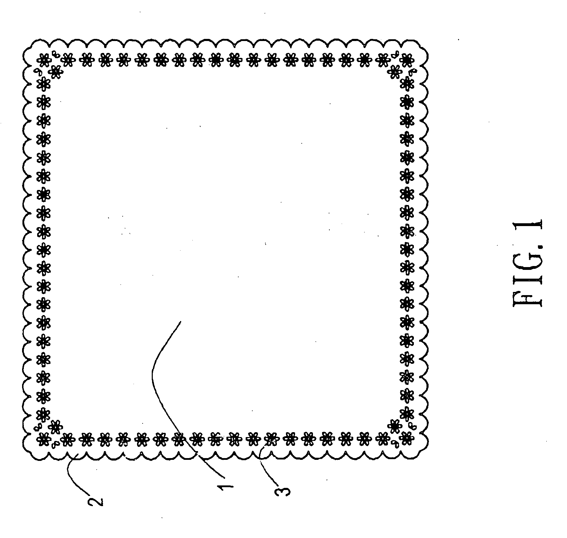

First, with reference to Fig. 1, the present invention has a napkin body 1 made by fabric and used for wiping when dining. Hemmed edges 2 are provided on the periphery of the napkin body. Special geometric motifs 3 arranged by many holes and patterns are distributed in the predetermined positions over the napkin body 1.

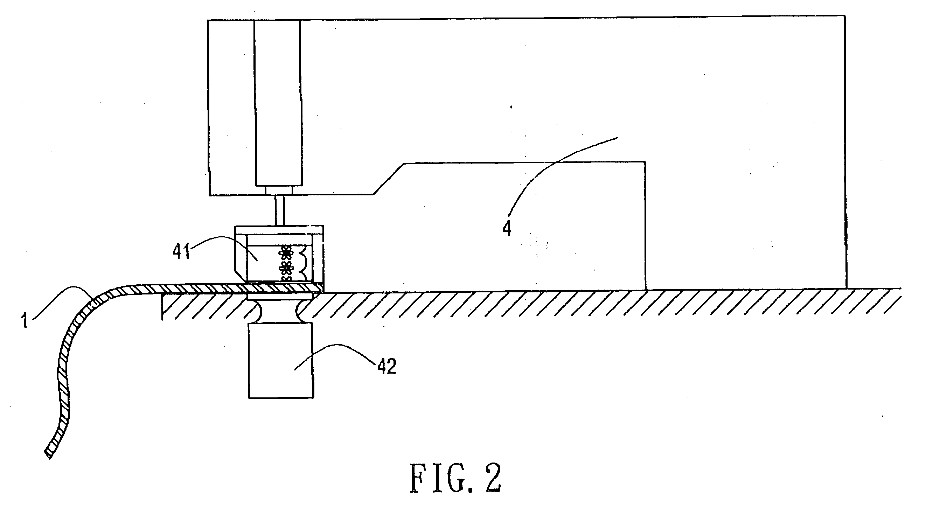

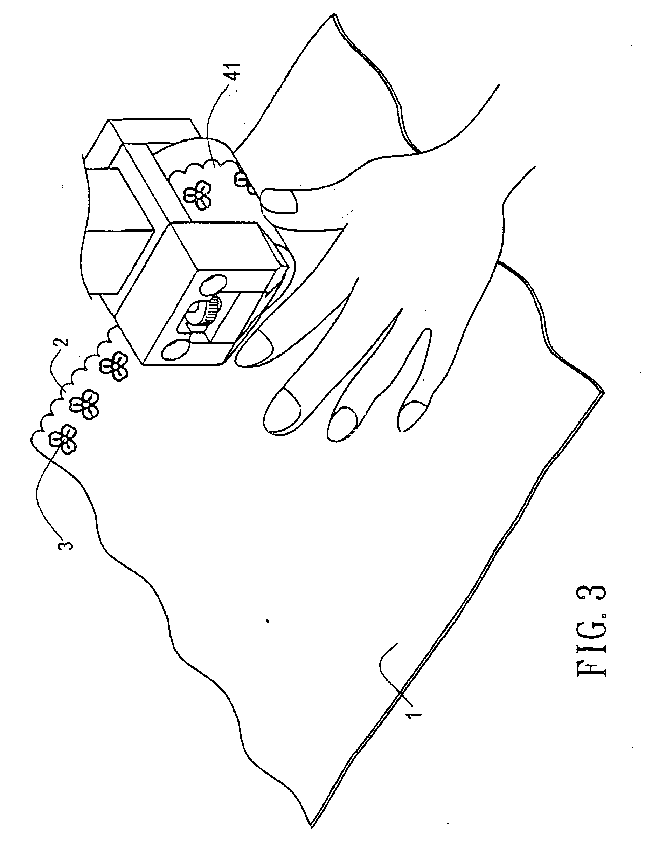

The method for making the above structure, as shown in Figs. 2 and 3, relies on using a supersonic embossing machine 4 as an embossing and hemming means to hem the edges of the napkin body 1 for press-forming the hemmed edges 2. Further, many special geometric motifs arranged by holes and patterns are embossed in the predetermined positions over the surface of the napkin body 1. The method of the present invention comprises the following steps:
Step 1: a roller 41 having a predetermined geometric motif 3 is mounted on the supersonic embossing machine 4.
Step 2: the edges of the un-hemmed napkin body are put between the roller 41 of the supersonic embossing machine 4 and a supersonic vibrating face 42.
Step 3: when turning on the supersonic embossing machine 4, the edges of the napkin body 1 are pushed forward, such that the roller 41 and the supersonic vibrating face 42 can emboss the special geometric motif 3 on the surface of the napkin body by the supersonic vibration, and simultaneously form the hemmed edges 2 in the periphery of the napkin body 1.

With the above structure of the present invention, the end of the threads on the napkin body 1 can be gathered inwardly by the vibrating energy and pressure produced by the supersonic vibration of the roller 41 and the vibrating face 42. As a result, a straight and continuous hemmed edges 2 can be easily made. Also, the geometric motif born on the roller 41 can be embossed on the surface of the napkin body 1.

Alternatively, in the practice of the method of the present invention, the embossing and hemming means can be a high-frequent welding machine or a laser welding means carried out in a more precise way. By the above means, the edges of the napkin body 1 can be hemmed and the special geometric motif 3 arranged by many holes and patterns can be embossed on the surface of the napkin body 1.

According to the above embodiments, it is apparent that the present invention has advantages as follows:
1. The present invention can hem the edges of the napkin body 1 directly to form hemmed edges 2. The operation is simple, and the products are excellent in appearance. Further, unlike the prior arts, the present invention does not have folding marks with different sizes.
2. In the present invention, the hemmed edges 2 made by the vibrating energy and pressure of the embossing and hemming means or made by the laser welding can make the napkin body 1 have uniform thickness and evenness. The present invention achieves the requirement for touch. Further, the special geometric motifs 3 on the surface of the napkin body 1 can increase the joy in dining.
3. In the present invention, since the edges of the napkin body 1 is formed into the hemmed edges 2 by the vibrating energy and pressure or by the laser, the hemmed edges 2 can be kept complete after a long-term washing without peeling off the end of the threads. Thus, the life of the napkin is increased.

Many changes and modifications in the abovementioned embodiment of the present invention can, of course, be carried out without departing from the scope thereof. Accordingly, to promote the progress in science and useful arts, the present invention is disclosed and is intended to be limited only by the scope of the appended claims.

### Reference Numerals of Essential Elements

- 1: napkin body
- 2: hemmed edge
- 3: geometric motif
- 4: supersonic embossing machine
- 41: roller
- 42: vibrating face
- a: napkin body
- b: folded side pattern
- c: sewing machine
- **c1**: sewing needle

## Claims

1. A structure of napkin having laces, comprising:
a napkin body made by fabric and used for wiping when dining;
hemmed edges provided on the periphery of the napkin body; and
special geometric motifs arranged by many holes and patterns distributed in predetermined positions over the napkin body.

2. A method for making a napkin having laces, comprising the steps of:
forming the hemmed edges on the periphery of the napkin body by using an embossing and hemming means; and
embossing the special geometric motifs arranged by many holes and patterns in the predetermined positions over the surface of the napkin body.

3. The method according to claim 2, wherein the embossing and hemming means is a supersonic embossing machine.

4. The method according to claim 3, comprising the steps of:
step 1, in which at least one supersonic embossing machine is used as an embossing and hemming means, and a roller having a predetermined geometric motif 3 is mounted on the supersonic embossing machine;
step 2, in which the edges of the un-hemmed napkin body are put between the roller of the supersonic embossing machine and a supersonic vibrating face; and
step 3, in which when turning on the supersonic embossing machine, the edges of the napkin body are pushed forward, such that the roller and the supersonic vibrating face emboss the special geometric motif arranged by many holes and patterns on the surface of the napkin body by the supersonic vibration, and simultaneously form the hemmed edges in the periphery of the napkin body.

5. The method according to claim 2,wherein the embossing and hemming means is a high-frequency welding machine.

6. The method according to claim 2,wherein the embossing and hemming means is a laser welding means.
